(19) Europäisches Patentamt

European Patent Office

Office européen des brevets

(11) EP 1 045 543 B1

(12) EUROPEAN PATENT SPECIFICATION

(45) Date of publication and mention
of the grant of the patent:
**13.09.2006 Bulletin 2006/37**

(51) Int Cl.:
*H04L 1/06* (2006.01)    *H04L 27/26* (2006.01)
*H04L 1/00* (2006.01)    *H04L 1/04* (2006.01)
*H04L 25/06* (2006.01)

(21) Application number: **00303231.5**

(22) Date of filing: **17.04.2000**

(54) **Diversity reception method and diversity receivers used with OFDM signals**

Verfahren zum Diversity-Empfang und Diversity-Empfänger für OFDM-Signale

Procédé de réception en diversité et récepteurs en diversité pour signaux OFDM

(84) Designated Contracting States:
**AT BE CH CY DE DK ES FI FR GB GR IE IT LI LU MC NL PT SE**

(30) Priority: **15.04.1999 GB 9908675**

(43) Date of publication of application:
**18.10.2000 Bulletin 2000/42**

(73) Proprietor: **BRITISH BROADCASTING CORPORATION**
**London W1A 1AA (GB)**

(72) Inventors:
• **Nokes, Christopher Ryan**
**Tadworth,**
**Surrey KT20 6NP (GB)**
• **Stott, Jonathan Highton**
**Tadworth,**
**Surrey KT20 6NP (GB)**
• **Haffenden, Olivier Paul**
**Tadworth,**
**Surrey KT20 6NP (GB)**
• **Moss, Peter Neil**
**Tadworth,**
**Surrey KT20 6NP (GB)**

(74) Representative: **Abnett, Richard Charles**
**REDDIE & GROSE**
**16 Theobalds Road**
**London WC1X 8PL (GB)**

(56) References cited:
EP-A- 0 896 440    GB-A- 2 292 293
US-A- 5 579 343

• BAUM K L ET AL: "A COMPARISON OF DIFFERENTIAL AND COHERENT RECEPTION FOR A CODED OFDM SYSTEM IN A LOW C/I ENVIRONMENT" IEEE GLOBAL TELECOMMUNICATIONS CONFERENCE. PHOENIX, ARIZONA, NOV. 3 - 8, 1997, GLOBAL TELECOMMUNICATIONS CONFERENCE (GLOBECOM), NEW YORK, IEEE, US, vol. 1, 3 November 1997 (1997-11-03), pages 300-304, XP000737554 ISBN: 0-7803-4199-6
• BAUM K L: "A SYNCHRONOUS COHERENT OFDM AIR INTERFACE CONCEPT FOR HIGH DATA RATE CELLULAR SYSTEMS" VTC'98. 48TH. IEEE VEHICULAR TECHNOLOGY CONFERENCE. OTTAWA, CANADA, MAY 18 - 21, 1998, IEEE VEHICULAR TECHNOLOGY CONFERENCE, NEW YORK, NY: IEEE, US, vol. 3 CONF. 48, 18 May 1998 (1998-05-18), pages 2222-2226, XP000931246 ISBN: 0-7803-4321-2

## Description

BACKGROUND OF THE INVENTION

This invention relates to diversity receivers for reception of transmitted radio-frequency signals for use with orthogonal frequency-division multiplex (OFDM) signals, and more particularly with coded OFDM (COFDM) signals, and to an automatic rotator based thereon.

Diversity reception is a technique that has often been used, particularly for mobile reception of signals. Typically, it involves two (or more) receiving antennas, and some signal processing to combine the received signals. The two antennas are generally located so that they can receive different versions of the same transmitted signals, for example by placing them a short distance apart (antenna spatial diversity), or by using antennas with different polarisation (antenna polarisation diversity) or radiation pattern (antenna pattern diversity). Frequency diversity is also known in which the signal is transmitted on two frequencies; in this case a single antenna may suffice connected to two tuners.

A conventional antenna diversity system often uses a technique termed maximal-ratio combining, where a weighted sum of the signals at the two antennas is formed before demodulation. The weighting factor depends on the signal-to-noise ratios of the input signals. However, this requires the formation of a relatively long-term average value for the weighting factors. Any given demodulated data bit may not be derived by the best method for that particular bit.

Various examples of diversity reception are to be found in United States Patents 5,530,725; 5,402,451; 5,345,600; 5,319,677 and 5,579,343; in European Patent Applications 0 766 414; 0 717 509; 0 716 513; and 0 637 878; and in International Patent Application WO97/13378.

European patent application EP 896 440 discloses a diversity receiver maximum ratio combining received OFDM signals before quadrature demodulating and Viterbi decoding the combined signals.

A system called Coded Orthogonal Frequency Division Multiplexing (COFDM) has been developed for Digital Audio Broadcasting (DAB) and Digital Terrestrial Television (known as DVB-T). The bits of each digital sample are distributed over a number of carriers at a number of different time intervals. The carriers are at different evenly-spaced frequencies. The Fast Fourier Transform (FFT) of the carriers at each time interval is taken. The output of each FFT comprises what is known as a symbol and a plurality of these are combined into a COFDM frame. The frames are then transmitted. The distributing of bits of data in frequency and in time gives a system which is very error resistant and can cope with a high degree of multipath distortion.

We have proposed a diversity technique for COFDM signals in European Patent Application No. 98309904.5 published under the number 0 921 646 on 9th June 1999. That proposal relies on the ability of COFDM signals to equalise readily and decode signals that suffer from high levels of multipath distortion. For example, even when two signals are received with equal power, but a relative delay such that the received spectrum has a number of nulls, a COFDM receiver will generally be able to decode the data correctly. The system of our Application No. 98309904.5 relies on this fact to build a diversity system, by deliberately combining two signals with an intentional delay, to create such a multipath environment. This has the advantage that not only will it work while both signals are present, but it will also work while one signal is partially or completely missing, for example in a flat fading environment. One distinct advantage of the system is that it is simple to implement, only requiring one receiver.

We have appreciated that while the technique of our European Application No. 98309904.5 could prove effective, it would often be discarding information, in that for those OFDM carriers where two perfectly good signals cancel each other, some information is inevitably lost. While the error protection system will generally be able to recover this information, some of the error correction capacity of the system has been used up in this way, even when each of the two carriers which cancelled might have both been carrying perfectly valid data.

It would be possible to combine the concept of diversity reception with COFDM by using maximum-ratio combining techniques. This is what has been proposed by Launay and others in "Antenna Diversity Techniques for Mobile and Portable DVB-T Receivers", International Broadcasting Convention, Amsterdam, 10-14 September 1999, pages 417-422 (published after the priority date of the present application). This system, even though it only uses linear combining, requires a special integrated circuit in the receiver, and is not particularly good with certain types of interference and degradation.

Strictly speaking, if the signal paths are such that only one of the antennas is capable of receiving a signal at any one time, then this is not a diversity system, but a system with extended coverage capabilities. However, such a system is regarded as being a diversity system within the meaning of the term as used in this specification. In any event, in practice it is likely that local reflections will always ensure that both antennas receive some signals.

SUMMARY OF THE INVENTION

The invention in its various aspects is defined in the independent claims below to which reference should now be made. Advantageous features are set forth in the appendant claims.

Preferred embodiments of the invention are described in more detail below with reference to the drawings. In these embodiments, designed in the context of COFDM signals, two demodulators are used, one for each of two antenna signals. It is then possible to extract more information from the two signals, by making use of soft-decision, or "confidence" information, which is available for every data bit of a COFDM signal at the output of the demodulator. Thus optimum results are obtained for each individual bit; the results are not dependent on long-term averaging but can be calculated from each individual OFDM symbol. When two reliable signals are presented to the demodulators, therefore, both demodulators can contribute equally to generating a high reliability signal for the Viterbi decoder. This system can be implemented in practice relatively easily and provides improved operation with certain types of interference.

BRIEF DESCRIPTION OF THE DRAWINGS

The invention will now be described in more detail, by way of example, with reference to the accompanying drawings, in which:

**Figure 1** is a block schematic diagram of a known OFDM broadcast transmission system incorporating a convolutional coding scheme, such as used as part of the DVB-T (digital video broadcasting - terrestrial) transmission proposal, with the transmitter being shown at (a) and a receiver at (b);

**Figure 2** is a simple illustration of the process of deriving soft-decision information for a QPSK (quadrature phase-shift-keying) signal;

**Figure 3** is a block schematic diagram of a first diversity receiver for COFDM signals in accordance with this invention;

**Figure 4** illustrates the need for timing synchronisation in the receiver of Figure 3;

**Figure 5** is a block schematic diagram of a second diversity receiver for COFDM signals in accordance with this invention, which provides synchronisation and squelch functions;

**Figure 6** illustrates an approximate antenna pattern of a pair of crossed dipoles which can be used with a receiver embodying the invention to provide an automatic rotator function; and

**Figure 7** is a graphical representation of a two-dimensional probability distribution, referred to in the Appendix below.

DETAILED DESCRIPTION OF THE PREFERRED EMBODIMENTS OF THE INVENTION

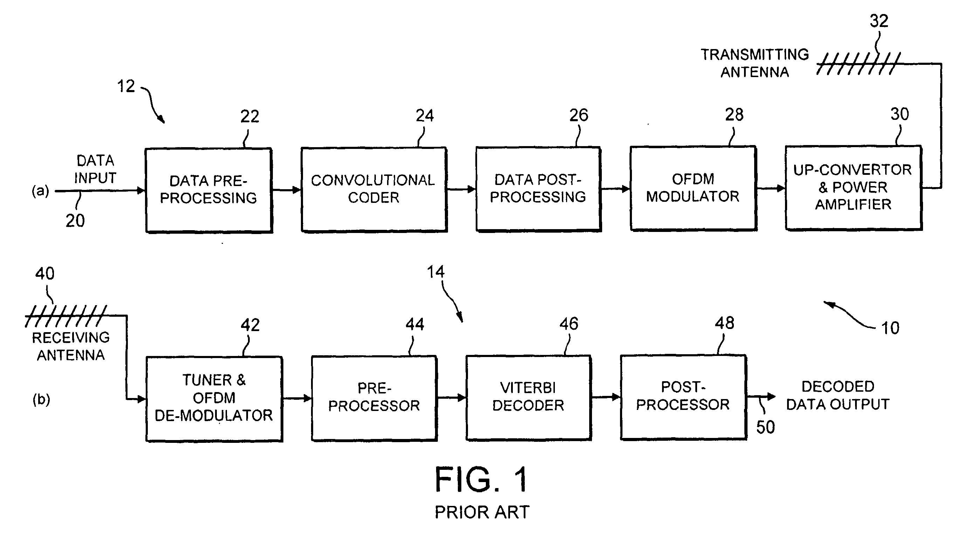

Figure 1 shows a known COFDM broadcast transmission system 10 with a transmitter 12 shown at (a) and a receiver 14 shown at (b).

The transmitter 12 receives input data at a data input 20 and applies it to data pre-processing circuitry 22. This is known and not therefore described herein in detail, but typically provides for energy dispersal, Reed-Solomon coding, and interleaving. The output of the data pre-processing circuitry 22 is applied to a convolutional coder 24, and thence the signal is applied to data post-processing circuitry 26. This again is known and is not therefore described in detail, but typically provides for further interleaving, constellation mapping, and frame adaptation. The output of the circuitry 26 is applied to an OFDM modulator 28, where it is subjected to OFDM modulation by means such as a Fast Fourier Transform circuit to produce a many-carrier output signal. This signal is modulated to transmission frequency and amplified by up-converter and power amplifier 30, the output of which is applied to a transmitting antenna 32.

An OFDM transmitter is described in more detail in European Standard EN 300 744, V1.1.2 (1997-08), Digital Video Broadcasting (DVB); Framing Structure, channel coding and modulation for digital terrestrial television, published by European Telecommunications Standards Institute (ETSI), Valbonne, France, August 1997. Reference should be made to this standard for further details of a COFDM transmitter, illustrated in Figure 1 of the standard, and of the COFDM signal and signal generation.

The receiver 14, shown at (b), has a receiving antenna 40 to which is connected a tuner and OFDM demodulator 42. The output of circuit 42 is applied to a pre-processor 44 which reverses the operations of the post-processing circuitry 26 in the transmitter and thence to a Viterbi decoder 46. From the Viterbi decoder 46 the signal passes to a post-processor 48 which reverses the operations of the pre-processing circuitry 22 in the transmitter and provides a decoded data output at 50.

Thus the transmitter 12 of Figure 1 includes the convolutional coder 24, together with some other processing to produce the modulated signal. The receiver 14 incorporates a maximum-likelihood decoder such as a Viterbi decoder 46, which decodes the data produced by the convolutional coder 24 in the transmitter. Simultaneously, the maximum-likelihood decoder attempts to correct for any errors in the demodulated signal that are introduced as a result of transmitting the signal through a transmission channel.

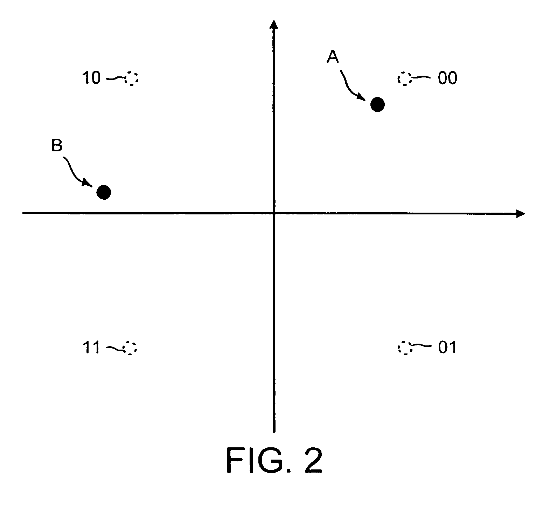

The maximum-likelihood decoding process makes use of soft-decision information (i.e. confidence, or reliability information) that is available from the demodulator. This process is illustrated in Figure 2. Figure 2 illustrates the points on a constellation diagram which represent the transmission of the data pairs 00,10,11 and 01 in a QPSK system. The two points marked A and B represent two received signals. The one marked A is at a phase and amplitude which is quite close to the 00 point, and thus it may be assumed that A represents a '00' with both bits having high confidence. On the other hand, the received point marked B is less clear. It is in the quadrant which corresponds to the value 10, but is quite close to the boundary with the 11 region. Thus in this case it can be assumed that the first bit, 1, is indeed a 1 with high confidence, but the second bit, 0, has low confidence.

While Figure 2 shows confidences as simply "high" or "low", in practice soft-decision signals are usually generated using a multi-level signal. For example, a 3-bit soft decision signal may be used, where the binary values '000' and '111' represent a modulated data sample of '0' and '1' respectively, both of high confidence, whereas a '100' would represent a very low confidence '1'. The single three-bit value thus conveys the two items of information, namely the decoded value being represented and a measure of the confidence that that value is correct. This is one way in which a confidence value can be associated with each sample.

In a multi-carrier OFDM demodulator, this soft-decision information is qualified by information about the level of noise and interference on the carrier from which that data sample was demodulated. This secondary information is sometimes termed channel state information (CSI). The effect of the channel state information is that a data value that appeared to be close to an expected constellation site from a carrier with a high level of noise should be treated with much lower confidence than the same data from a more robust carrier.

The application of channel state information to the soft decisions decoded from an OFDM signal is described in much more detail in a paper by Stott, J.H., 1997, Explaining some of the magic of COFDM, Proceedings of the 20th International Symposium, Montreux 1997, pages 341 to 350. Reference may also be made to our United Kingdom Patent Application No. 9821385.3 and corresponding European Patent Application EP 0 991 239 A.

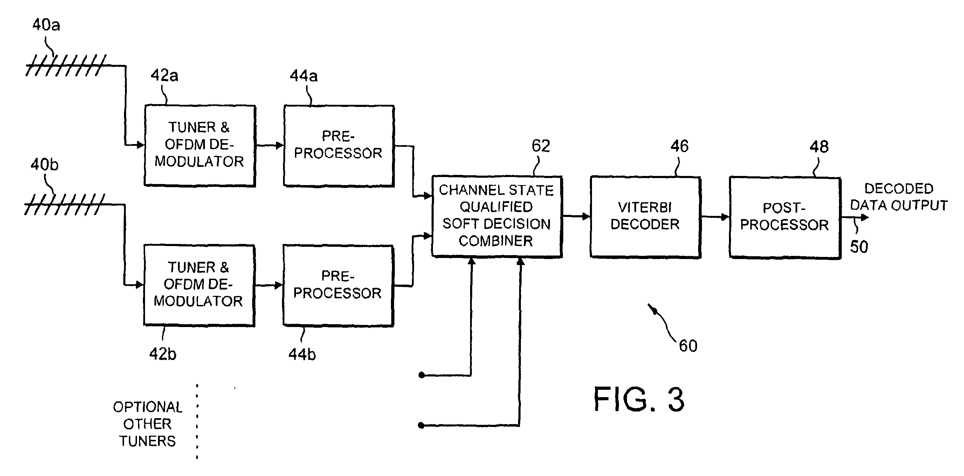

A first receiver 60 embodying the invention will now be described with reference to Figure 3 of the drawings. The receiver has two antennas (aerials) 40a and 40b connected respectively to tuner and OFDM demodulation circuits 42a and 42b. The output of each tuner and OFDM demodulation circuit 42a, 42b is applied to a respective pre-processor 44a, 44b. Thus the receiver has two radio-frequency 'front ends' providing two signal outputs. The OFDM demodulators provide a confidence level for every sample on every one of the many carriers of the COFDM signal. The outputs of the two pre-processors are applied to a channel-state-qualified soft-decision combiner circuit 62, the output of which is fed to a Viterbi soft-decision decoder 46. Finally the output of the Viterbi decoder 46 is applied to a post-processor 48 which provides the decoded data output at 50.

In the system of Figure 3, it is thus seen that instead of a single receiver, a diversity receiving system is employed. For this, two tuners and demodulators are used, and the channel-state-qualified soft-decision values are combined to produce a single output value. Optionally, more than two tuners and demodulators could be included, as indicated on the figure.

The manner in which the two received and demodulated signals may be combined will now be described.

A first possible scheme considered is, for each demodulated data sample, simply to select the sample with the greatest confidence value at the input to the combiner 62.

However, a better scheme has been found to be to add, or rather average, the soft-decision values within the combiner 62, provided that an appropriate soft-decision representation is being used, as described below. For two or more receivers receiving signals with independent impairments, we have found that adding the soft decisions is the optimum combining method. Reference should be made to Section 1 of the Appendix below for an explanation of this.

However, in many cases the impairments on the input signals will not be entirely independent. In this case, simply adding the soft decisions is not the optimum method, though it will normally still produce a good result. To achieve optimal combining under these conditions, a more complex process of combining is required, which takes into account a measure of the correlation between the signals. Reference should be made to Section 2 of the Appendix below for an explanation of this.

As described above, two simple types of soft-decision combiner have been considered, namely (i) a simple switch and (ii) addition. The exact form of the combiner 62 depends on the format of the soft-decision values produced by the demodulators 42a, 42b. As an example above they were assumed to be 3-digit values. As another example, consider the case where the soft-decision values are represented by numbers of unlimited precision ("real" numbers), or at least the maximum precision allowed by the processing system. Suppose that a transmitted data bit of '0', when demodulated with high confidence, is represented by the soft-decision value -1.0, and a transmitted data bit of '1' with high confidence is represented by the soft-decision value +1.0. Therefore the soft-decision value of 0.0 represents the "don't know" case. For this example the "switched" combiner selects the soft-decision input with the largest magnitude, and the adding combiner adds the two values and divides the result by 2.

For soft-decision representations other than the example above, slightly modified combining schemes are needed. For example, if the soft decisions are 3-bit values, when added together a 4-bit result is produced. If the maximum-likelihood decoder can only accept 3-bit input, then a carefully implemented rounding scheme is needed to convert the 4-bit result to a 3-bit number. We have also appreciated that a problem can arise in combining limited bit-resolution soft decisions, such as 3-digit values, so as to be sure that the meaning of the decision levels is preserved. For example, in the three-bit scheme described above, the values '000' and '111' represent a maximum confidence '0' and '1' respectively. The values '011' and '100' will therefore represent a minimum confidence '0' and '1' respectively. When they are added, they will give 0111 in four bits, and this should be considered to represent the 'don't know' case, since the bit is equally likely to be a '0' or a '1'. Consequently, whilst the input decisions had no 'don't know' state, the output decisions do. If the maximum-likelihood decoder does not allow such a state at the input, steps need to be taken to prevent a bias from being introduced. If the maximum-likelihood decoder has a three-bit input, and the '0111' is constantly rounded to '011', a bias in favour of representing a '0' is introduced. Ideally '0111' should be rounded alternately to '011' and '100'. To prevent bias when rounding the other levels, values ending in 1 and greater than 1000 can be rounded down, whereas values ending in a 1 and less than 0110 can be rounded up. Other solutions will be apparent to those skilled in the art.

Other possible schemes could be used to combine the soft-decision values produced by the two (or more) front ends (those parts of the receiving system that are before the combiner unit), and which emanate from the pre-processors 44a and 44b.

The use of confidence values relating to each of the individual bits of the COFDM signal brings the important advantage that the combining of the received diversity signals is optimised for every bit of every carrier of every OFDM signal.

The above discussion has ignored any issues of synchronisation. For the system to work, it has been assumed that the signals presented to the receivers are co-timed as far as the transmitted data is concerned, and that the only difference between the two is different channel impairments. In practice this idealised situation is unlikely to be achieved; the demodulators may well lock with a small relative delay between them, and in a mobile receiver this delay will change as the transmission channels for the two paths change.

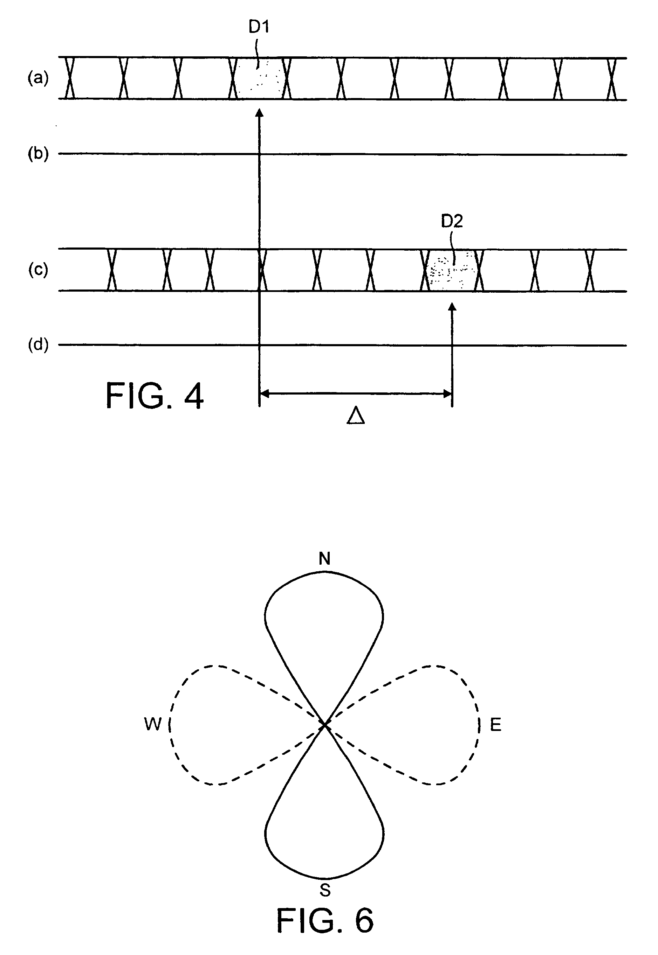

This need not cause a problem, since it is usual for OFDM demodulators to produce synchronising information, for example a signal representing the timing of the start of each symbol. These timing signals can be used to re-time the data streams before they are fed to the combiner. An example of this process is shown in Figure 4. Figure 4 shows at (a) the data from the first of the two demodulators, e.g. the demodulator 42a in Figure 3. At (b) is shown the timing signal produced from the first demodulator. At (c) is shown the data from the second demodulator, 40b, and at (d) the timing signal from the second demodulator. At D1 in the signal at line (a) from the first demodulator is shown shaded the data corresponding to a known point, e.g. the start of a symbol of the COFDM signal. At D2 in the signal at line (c) from the second demodulator is shown shaded the corresponding data from the second demodulator. It is seen that there is a certain time delay between them, and the data from the first demodulator needs to be delayed by an amount $\Delta$.

Although the signals in Figure 4 are shown with the same steady clock rate, it is possible that the clock rates from the demodulators will in fact vary slightly. However, the overall long-term average clock rate will be the same, since all the demodulators are trying to decode the same transmitted data. The re-synchronisation process needs to take account of this slight rate variation, for example by applying the two data inputs through two buffer circuits.

One problem we have found is that the combining operation achieved in the combiner 62 can be disturbed when the signal to one of the demodulators becomes corrupted. To overcome this we propose including a squelch mechanism. The term squelch is well-known in radio communications generally and refers to a threshold circuit which is set to eliminate background noise. In principle, it is possible that the soft-decision signals from the demodulator will act as their own squelch. This occurs if the soft-decision value from a demodulator defaults to the "don't care" state (0.0 in the above example), when the input signal becomes so poor that the demodulator cannot synchronise to the received signal correctly. However, if this cannot be relied upon, the signals into the combiner 62 need to be "enabled" (that is they only contribute to the combining process) when the demodulator is known to be producing a sensible signal. One way to detect this is using a synchronisation lock signal such as is often available from an OFDM demodulator chip.

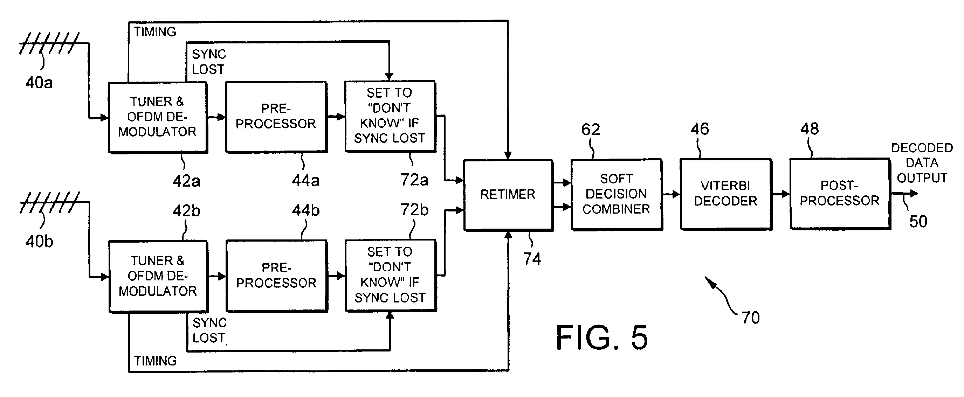

A second embodiment of the invention is illustrated in Figure 5, which combines the basic system of Figure 3 with the need for synchronisation and squelch. The same reference numerals are used for the same components as previously and they are not described in detail again.

The receiver 70 of Figure 5 is thus similar to the receiver 60 of Figure 3, but with certain additions. These include two circuits 72a and 72b, one connected to the output of each of the pre-processors 44a and 44b respectively. These circuits 72 set the signal to a "don't know" value if synchronization is lost, and receive a 'sync. lost' output from the respective one of the tuner and demodulator circuits 42a,42b. These circuits 72 thus provide the 'squelch' function. The outputs of the circuits 72 are both applied to a retimer circuit 74, which receives as control signals timing signals from the two tuner and demodulation circuits 42a,42b, to provide the synchronisation function.

With a diversity system of the type illustrated in Figure 3 or Figure 5, every demodulated data bit has its own confidence value and is treated independently by the diversity system, allowing the diversity system always to use the best available signal. Where the signals are COFDM signals, this applies to every demodulated data bit on every one of the carriers.

In a further diversity system for digital signals, two complete demodulators, including error correctors, are used for the two input signals, respectively. In this case the diversity system operates by switching between the two demodulated and error corrected signals. The switching is controlled by the signals that are available from the error corrector to indicate the approximate error rate being encountered by the error corrector. Once again, such a system requires many data samples to be decoded to determine an average error rate, before diversity switching can be employed. In this instance the average error rate rather than the confidence value is used as a way of monitoring the quality of the received signals.

The systems of Figures 3 and 5 which embody the invention allow for both seamless switching and optimum combination of the input data signals, making them appropriate for a variety of types of diversity, as will now be described.

The technique described can be applied to physically separated antennas, that is *antenna spatial diversity.* It can similarly be applied to antennas of different polarisations, that is *antenna polarisation diversity.*

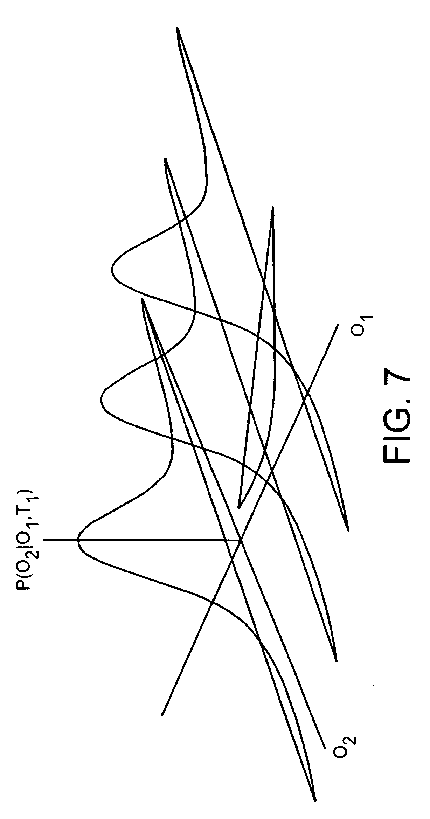

Another very interesting application is in *antenna pattern diversity.* Consider the simple example of a pair of crossed dipoles. Each has a figure-of-eight antenna pattern, as shown in Figure 6 by solid and dotted lines, respectively. If these two antennas are connected to the two inputs of a diversity receiver embodying the invention, the receiver will automatically select the most appropriate combination of receivers (i.e. dipoles) to use.

If for example a signal is being received mainly from the East or West directions, the dotted line antenna will be favoured. Conversely, for the North or South directions the solid line antenna will be favoured. Equally, a combination of the two can be used for intermediate directions. In effect an automatic rotator has been formed.

For a conventional maximal-ratio diversity system using antennas as illustrated in Figure 6, a weighted sum of the signals to the two antennas would be used, with the weighting factor depending on the appropriate signal-to-noise ratio. As mentioned above, this requires the formation of a relatively long-term average value for the weighting factors. With the diversity system now proposed, every demodulated data bit is treated independently by the diversity system, allowing extremely rapid movement from one antenna to the next.

As noted above, strictly speaking, if the signal paths are such that only one of the antennas is capable of receiving a signal at any one time, then this is not a diversity system, but a system with extended coverage capabilities. In practice, with the example above, it is likely that local reflections will always ensure that both antennas receive some signals.

This antenna pattern diversity technique could be extended to a system with more antennas, where each would have a significant gain, increasing the signal level into each antenna, and therefore further improving the reception capabilities of the overall system.

While the system has been described in terms of antenna diversity, it is also applicable to frequency diversity applications. In this case, the signal is transmitted on more than one frequency, as sometimes happens in the overlap areas between two transmitters, or as is common practice in short wave (HF) broadcasting. This is done because of the large coverage areas and vagaries of predicting which frequency band will propagate well on a given day. Sometimes multiple frequencies are used in the same band, perhaps partly as a strategy to avoid interference, deliberate or otherwise.

In such a frequency diversity system, two or more signals for the diversity receiver are formed from tuners working at different frequencies. The receiver then simply makes the task of combining these signals together a seamless one, which should result in no disturbance on the decoded output signal. The structure of such a system is the same as in Figure 3 or Figure 5, the tuners now operating at different frequencies. The signals that are broadcast on the two or more frequencies should be suitably constrained. In theory this means that the two signals need to be co-timed, and to be identical except for the broadcast centre frequency. In practice such a constraint is not fully necessary.

Firstly the two signals need only be "closely" timed, so that any variation in timing of the signals received by the diversity receiver is less than the delay that can be inserted by the synchronisation process described above.

Secondly, the signals should be transmitted in such a way that the appropriate re-timing signals can be recovered in the receiver. One way to achieve this is to broadcast all the signals on the different frequencies with the same relationship between the data bits on the one hand, and the OFDM symbol, frame, superframe etc. on the other hand. This is very similar to the process that is required to synchronise OFDM single frequency networks (SFN). A means of achieving this for DVB-T signals is given by the Mega-frame Initialization Packet (MIP) specification: ETSI Technical Standard, Digital Video Broadcasting (DVB); DVB mega-frame for Single Frequency Network (SFN) synchronization; ETSI technical standard TS 101 191 V 1.2.1 (1998-04), European Telecommunications Standards Institute, April 1998.

Thirdly, it is not necessary for any reference information transmitted with the OFDM signal to be identical between the transmissions on different frequencies. For example, in the DVB-T system, reference information is inserted as pilot data cells, namely scattered, continual and transmission parameter signalling (TPS) pilots, and these need not be identical, since the demodulators remove this reference information before producing the soft decisions. For example, the reserved TPS bits could be used differently on different frequencies without adverse affect on the diversity system. This principle can be extended further, so that 2K modulation can be used on one frequency and 8K on another, provided that a means of synchronisation is left open to the receiver.

In any event, the same data should be coded through the same convolutional coder, or identical convolutional coders, before being conveyed by diverse routes to the receivers.

It can be seen that the diversity systems described and illustrated can be used in many mobile data transmission applications, including DVB-T, DAB, DRM (Digital Radio Mondiale) and systems such as radio cameras. The technique does not depend specifically upon the OFDM signal; it can be applied to other digital signals (e.g. single carrier systems).

However it is believed that the greatest benefit will be obtained when used in conjunction with the OFDM transmission system.

Particularly when implemented in the frequency diversity mode described above, the diversity technique described using soft-decision decoding can have application in facilitating hand-over in multi-frequency networks, such as used for mobile telephones. That is, as a receiver moves through such a network, there is a need for the receiver to re-tune to new transmitters, desirably in a seamless way. The present system can provide the means to achieve this, thereby effectively improving the coverage in the overlap area between transmitters.

A DVB-T implementation of the system can be made using already-available LSI Logic demodulator chips L64780 and L64724 manufactured by LSI Logic Corporation, 1551 McCarthy Boulevard, Milpitas, California 95035, USA. The L64780 is the DVB-T demodulator and produces soft-decision data at its output. The L64724 is used as the Viterbi and Reed-Solomon error correctors (although in practice it is a full satellite demodulator chip). The added components for the diversity system can be positioned at the interface between these two chips. The L64780 also produces signals to synchronise the diversity system and implement the squelch described above.

Thus in summary, a system has been described which allows diversity reception of two or more signals which carry the same data signal, but which suffer different transmission channel impairments. The system allows seamless combination of the two signals in a way that allows for the optimum data output to be produced. The technique applies equally for (a) antenna spatial diversity, (b) antenna polarisation, (c) pattern diversity, or (d) frequency diversity, allowing possible applications in many data transmission applications including DVB-T, DAB and DRM.

**APPENDIX**

**Section 1 - Independent Observations**

Suppose $P(T_1|O_1)$ is the probability that symbol $T_1$ (a 'one') was sent given observation $O_1$. A single soft-decision output from the receiver's channel estimation circuitry and Viterbi decoder provides the following ratio:

$$P(T_1|O_1) / P(T_0|O_1) .$$

If a second receiver is used which processes observation $O_2$ then also:

$$P(T_1|O_2) / P(T_0|O_2) .$$

These ratios need to be combined to provide the conditional probability ratio:

$$P(T_1| O_1,O_2) / P(T_0| O_1,O_2) .$$

Now using Bayes' theorem:

$$P(T_1| O_1,O_2) / P(T_0| O_1,O_2) = P(O_1,O_2 |T_1) / P(O_1,O_2 |T_0)$$
$$x\ P(T_1)/P(O_1,O_2)\ x\ P(O_1,O_2) / P(T_0) .$$

But $P(T_1) / P(T_0) = 1$ (i.e. a one or a zero is equally likely to be sent), so:

$$P(T_1| O_1,O_2) / P(T_0| O_1,O_2) = P(O_1,O_2 |T_1) / P(O_1,O_2 |T_0) .$$

If independence of observations is now assumed:

$$P(O_1, O_2 \mid T_1) = P(O_1 \mid T_1) \times P(O_2 \mid T_1)$$

so:

$$P(O_1, O_2 \mid T_1) / P(O_1, O_2 \mid T_0) = (P(O_1 \mid T_1) \times P(O_2 \mid T_1)) /$$
$$(P(O_1 \mid T_0) \times P(O_2 \mid T_0)).$$

Hence if the probability ratios are multiplied or the log-likelihood ratios summed, the desired joint probability function is obtained.

**Section 2 - Non-independent Observations**

If the observations $O_1$ and $O_2$ are not independent, the expression:

$$P(O_1, O_2 \mid T_1) = P(O_1 \mid T_1) \times P(O_2 \mid T_1)$$

does not hold; it must be replaced with:

$$P(O_1, O_2 \mid T_1) = P(O_1 \mid T_1) \times P(O_2 \mid O_1, T_1).$$

Hence the following is obtained:

$$P(O_1, O_2 \mid T_1) / P(O_1, O_2 \mid T_0) = (P(O_1 \mid T_1) \times$$
$$P(O_2 \mid O_1, T_1)) / (P(O_1 \mid T_0) \times P(O_2 \mid O_1, T_0)).$$

As there is no direct access to the quantities $P(O_2 \mid O_1, T_1)$ and $P(O_2 \mid O_1, T_0)$, it is necessary to obtain them by other means. This can be done by building up a two-dimensional probability distribution based on actual value pairs $O_1$, $O_2$ pertaining to post-decision values $T_0$ and $T_1$. Once built up over time, the distribution can then be used as a look-up table. The 2-D plot is of the form shown in Figure 7.

**Claims**

1.   An automatic rotator for receiving OFDM digital radio-frequency signals from an unspecified direction, comprising:

a first antenna (40a) and at least one second antenna (40b), the antennas having different directional sensitivities; tuner and demodulator circuits (42a, 42b) connected to the first and second antennas for extracting from OFDM signals received by the first and second antennas respectively first and second output values representative of the values of the received signals and of confidence values representing a measure of the confidence with which the received signals represent each of the output values; and combining means (62) for combining the first and second output values in dependence upon the said confidence values to provide a combined signal appropriately combining the contributions from the first and second antennas to reflect the direction from which the signal is received.

2.   A diversity receiver for receiving OFDM digital signals transmitted at radio frequency, the receiver comprising:

a first tuner and digital demodulator circuit (42a) comprising a first tuner and a first digital demodulator, the first digital demodulator providing a succession of first output values representative of the values of the received OFDM signals and of confidence values representing a measure of the confidence with which the received signals represent each of those output values;

at least one second tuner and digital demodulator circuit (42b) comprising a second tuner and a second digital demodulator, the second digital demodulator providing a succession of second output values representative of the values of received OFDM signals and of confidence values representing a measure of the confidence with which the received signals represent each of those output values; and

combining means (62) coupled to the first and second tuner and digital demodulator circuits for receiving and combining the first and second output values from the first and second tuner and digital demodulator circuits in dependence upon the said confidence values to provide a combined signal.

3. A receiver according to claim 2, in which the receiver is a digital audio broadcasting (DAB) receiver.

4. A receiver according to claim 2, in which the receiver is a digital terrestrial television (DVB-T) receiver.

5. A receiver according to any of claims 2 to 4, further comprising a maximum-likelihood decoder (46) coupled to receive the combined signal output from the combining means.

6. A receiver according to claim 5, in which the maximum-likelihood decoder is a Viterbi decoder.

7. A receiver according to claim 5 or 6, in which the maximum-likelihood decoder is adapted to make use of the confidence values from the first and second tuner and digital demodulator circuits.

8. A receiver according to any of claims 2 to 7, in which the combining means is adapted to select the output of whichever of the first and second tuner and digital demodulation circuits has the highest confidence.

9. A receiver according to any of claims 2 to 7, in which the combining means is adapted to provide a weighted combination of the output of the first and second tuner and digital demodulation circuits.

10. A receiver according to claim 9, in which the combining means is adapted to average values provided by the first and second tuner and digital demodulation circuits.

11. A receiver according to any of claims 2 to 10, further comprising means (74) for retiming one of the first and second output values so as to synchronise the first and second output values applied to the combining means.

12. A receiver according to any of claims 2 to 11, further comprising a circuit (72) to provide 'don't know' first and second output values if the respective received signal is corrupted.

13. A receiver according to any of claims 2 to 12, arranged for antenna spatial diversity and further comprising two spaced antennas (40a, 40b) to which the first and second tuner and demodulator circuits are connected respectively.

14. A receiver according to any of claims 2 to 12, arranged for antenna polarisation diversity and further comprising first and second antennas (40a, 40b) arranged to receive signals of different polarisations, the first and second tuner and demodulator circuits being connected respectively to the first and second antennas.

15. A receiver according to any of claims 2 to 12, arranged for antenna pattern diversity and further comprising first and second antennas (40a, 40b) arranged to have different directional sensitivities, the first and second tuner and demodulator circuits being connected respectively to the first and second antennas.

16. A receiver according to any of claims 2 to 12, arranged for frequency diversity, in which the first and second tuners are adapted to receive signals at different transmission frequencies.

17. A receiver according to any of claims 2 to 16, in which there are more than two tuner and digital demodulation circuits.

**EP 1 045 543 B1**

**Patentansprüche**

1.  Automatischer Rotator zum Empfangen von digitalen OFDM-Funkfrequenzsignalen aus einer unbestimmten Richtung, der Folgendes umfasst:

    eine erste Antenne (40a) und wenigstens eine zweite Antenne (40b), wobei die Antennen unterschiedliche Richtungsempfindlichkeiten haben;
    Tuner- und Demodulatorschaltungen (42a, 42b), die mit der ersten und der zweiten Antenne verbunden sind, um von OFDM-Signalen, die von der ersten und der zweiten Antenne empfangen wurden, jeweils erste und zweite Ausgangswerte zu empfangen, die für die Werte der empfangenen Signale sowie für Konfidenzwerte repräsentativ sind, die ein Maß der Konfidenz repräsentieren, mit der die empfangenen Signale jeweils die Ausgangswerte repräsentieren; und
    ein Kombinationsmittel (62) zum Kombinieren der ersten und zweiten Ausgangswerte in Abhängigkeit von den genannten Konfidenzwerten zum Erzeugen eines kombinierten Signals, das auf geeignete Weise die Beiträge von der ersten und der zweiten Antenne kombiniert, um die Richtung zu reflektieren, aus der das Signal empfangen wird.

2.  Diversity-Empfänger zum Empfangen von mit Funkfrequenz gesendeten digitalen OFDM-Signalen, wobei der Empfänger Folgendes umfasst:

    eine erste Tuner- und digitale Demodulatorschaltung (42a), die einen ersten Tuner und einen ersten digitalen Demodulator umfasst, wobei der erste digitale Demodulator eine Folge von ersten Ausgangswerten erzeugt, die für die Werte der empfangenen OFDM-Signale und die Konfidenzwerte repräsentativ sind, die ein Maß der Konfidenz repräsentieren, mit der die empfangenen Signale jeweils diese Ausgangswerte repräsentieren;
    wenigstens eine zweite Tuner- und digitale Demodulatorschaltung (42b), die einen zweiten Tuner und einen zweiten digitalen Demodulator umfasst, wobei der zweite digitale Demodulator eine Folge von zweiten Ausgangswerten erzeugt, die für die Werte empfangener OFDM-Signale sowie für Konfidenzwerte repräsentativ sind, die ein Maß der Konfidenz repräsentieren, mit der die empfangenen Signale jeweils diese Ausgangswerte repräsentieren; und
    ein Kombinationsmittel (62), das mit der ersten und der zweiten Tuner- und digitalen Demodulatorschaltung gekoppelt ist, zum Empfangen und Kombinieren der ersten und zweiten Ausgangswerte von der ersten und zweiten Tuner- und digitalen Demodulatorschaltung in Abhängigkeit von den genannten Konfidenzwerten zum Erzeugen eines kombinierten Signals.

3.  Empfänger nach Anspruch 2, wobei der Empfänger ein DAB-(Digital Audio Broadcasting)-Empfänger ist.

4.  Empfänger nach Anspruch 2, wobei der Empfänger ein DVB-T-(Digital Terrestrial Television)-Empfänger ist.

5.  Empfänger nach einem der Ansprüche 2 bis 4, der ferner einen Maximum-Likelihood-Decoder (46) umfasst, der zum Empfangen des kombinierten Signalausgangs von dem Kombinationsmittel gekoppelt ist.

6.  Empfänger nach Anspruch 5, wobei der Maximum-Likelihood-Decoder ein Viterbi-Decoder ist.

7.  Empfänger nach Anspruch 5 oder 6, wobei der Maximum-Likelihood-Decoder die Aufgabe hat, die Konfidenzwerte von der ersten und der zweiten Tuner- und digitalen Demodulatorschaltung zu nutzen.

8.  Empfänger nach einem der Ansprüche 2 bis 7, bei dem das Kombinationsmittel die Aufgabe hat, den Ausgang derjenigen der ersten und zweiten Tuner- und digitalen Demodulationsschaltungen zu wählen, die die höchste Konfidenz hat.

9.  Empfänger nach einem der Ansprüche 2 bis 7, bei dem das Kombinationsmittel die Aufgabe hat, eine gewichtete Kombination des Ausgangs der ersten und zweiten Tuner- und digitalen Demodulationsschaltung zu erzeugen.

10. Empfänger nach einem der Anspruch 9, wobei das Kombinationsmittel die Aufgabe hat, von der ersten und der zweiten Tuner- und digitalen Demodulationsschaltung erzeugte Werte zu mitteln.

11. Empfänger nach einem der Ansprüche 2 bis 10, der ferner Mittel (74) umfasst, um das Timing der ersten oder der zweiten Ausgangswerte so zu verändern, dass die auf das Kombinationsmittel angewendeten ersten und zweiten Ausgangswerte synchronisiert werden.

**12.** Empfänger nach einem der Ansprüche 2 bis 11, der ferner eine Schaltung (72) umfasst, um erste und zweite "Weiß nicht"-Ausgangswerte zu erzeugen, wenn das jeweilige empfangene Signal verfälscht ist.

**13.** Empfänger nach einem der Ansprüche 2 bis 12, der für räumliche Antennen-Diversity angeordnet ist und ferner zwei beabstandete Antennen (40a, 40b) umfasst, mit der die erste und die zweite Tuner- und Demodulatorschaltung jeweils verbunden sind.

**14.** Empfänger nach einem der Ansprüche 2 bis 12, der für räumliche Antennenpolarisations-Diversity angeordnet ist und ferner eine erste und eine zweite Antenne (40a, 40b) mit der Aufgabe umfasst, Signale unterschiedlicher Polarisationen zu empfangen, wobei die erste und die zweite Tuner- und Demodulatorschaltung jeweils mit der ersten und der zweiten Antenne verbunden sind.

**15.** Empfänger nach einem der Ansprüche 2 bis 12, der für räumliche Antennenpolarisations-Diversity angeordnet ist und ferner eine erste und eine zweite Antenne (40a, 40b) umfasst, die so gestaltet sind, dass sie unterschiedliche Richtungsempfindlichkeiten haben, wobei die erste und die zweite Tuner- und Demodulatorschaltung jeweils mit der ersten und der zweiten Antenne verbunden sind.

**16.** Empfänger nach einem der Ansprüche 2 bis 12, der für Frequenz-Diversity angeordnet ist, wobei der erste und der zweite Tuner die Aufgabe haben, Signale mit unterschiedlichen Sendefrequenzen zu empfangen.

**17.** Empfänger nach einem der Ansprüche 2 bis 16, bei dem mehr als zwei Tuner- und digitale Demodulationsschaltungen vorhanden sind.

**Revendications**

**1.** Rotateur de fréquence pour recevoir des signaux de fréquence radioélectrique numériques OFDM depuis une direction non spécifiée, comprenant :

une première antenne (40a) et au moins une deuxième antenne (40b), les antennes ayant des sensibilités directionnelles différentes ;
des circuits d'accord et de démodulation (42a, 42b) connectés aux première et deuxième antennes pour extraire des signaux OFDM reçus par les première et deuxième antennes respectivement des première et deuxième valeurs de sortie représentatives des valeurs des signaux reçus et des valeurs de confiance représentant une mesure de la confiance avec laquelle les signaux reçus représentent chacune des valeurs de sortie ; et
des moyens de combinaison (62) pour combiner les première et deuxième valeurs de sortie selon que lesdites valeurs de confiance fournissent un signal combiné combinant convenablement les contributions des première et deuxième antennes afin de refléter la direction d'où est reçu le signal.

**2.** Récepteur en diversité pour recevoir des signaux numériques OFDM émis à une fréquence radioélectrique, le récepteur comprenant :

un premier circuit d'accord et de démodulation (42a) comprenant un premier dispositif d'accord et un premier démodulateur numérique, le premier démodulateur numérique fournissant une succession de premières valeurs de sortie représentatives des valeurs des signaux OFDM reçus et de valeurs de confiance représentant une mesure de la confiance avec laquelle les signaux reçus représentent chacune de ces valeurs de sortie ;
au moins un deuxième circuit d'accord et de démodulation (42b) comprenant un deuxième dispositif d'accord et un deuxième démodulateur numérique, le deuxième démodulateur numérique fournissant une succession de deuxièmes valeurs de sortie représentatives des valeurs des signaux OFDM reçus et de valeurs de confiance représentant une mesure de la confiance avec laquelle les signaux reçus représentent chacune de ces valeurs de sortie ; et
un moyen de combinaison (62) couplé aux premier et deuxième circuits d'accord et de démodulation numérique pour recevoir et combiner les premières et deuxièmes valeurs de sortie des premier et deuxième circuits d'accord et de démodulation numérique en fonction desdites valeurs de confiance afin de fournir un signal combiné.

**3.** Récepteur selon la revendication 2, dans lequel le récepteur est un récepteur d'audiodiffusion numérique (DAB).

**4.** Récepteur selon la revendication 2, dans lequel le récepteur est un récepteur de télévision terrestre numérique (DVB-T).

**5.** Récepteur selon l'une quelconque des revendications 2 à 4, comprenant en outre un décodeur de vraisemblance maximum (46) couplé pour recevoir la sortie de signal combiné du moyen de combinaison.

**6.** Récepteur selon la revendication 5, dans lequel le décodeur de vraisemblance maximum est un décodeur de Viterbi.

**7.** Récepteur selon la revendication 5 ou 6, dans lequel le décodeur de vraisemblance maximum est adapté pour utiliser les valeurs de confiance des premier et deuxième circuits d'accord et de démodulation numérique.

**8.** Récepteur selon l'une quelconque des revendications 2 à 7, dans lequel le moyen de combinaison est adapté pour sélectionner la sortie de celui des premier et deuxième circuits d'accord et de démodulation numérique qui a la confiance la plus élevée.

**9.** Récepteur selon l'une quelconque des revendications 2 à 7, dans lequel le moyen de combinaison est adapté pour fournir une combinaison pondérée de la sortie des premier et deuxième circuits d'accord et de démodulation numérique.

**10.** Récepteur selon la revendication 9, dans lequel le moyen de combinaison est adapté pour moyenner des valeurs fournies par les premier et deuxième circuits d'accord et de démodulation numérique.

**11.** Récepteur selon l'une quelconque des revendications 2 à 10, comprenant en outre un moyen (74) pour resynchroniser l'une des première et deuxième valeurs de sortie de façon à synchroniser les première et deuxième valeurs de sortie appliquées au moyen de combinaison.

**12.** Récepteur selon l'une quelconque des revendications 2 à 11, comprenant en outre un circuit (72) pour fournir des première et deuxième valeurs de sortie "ignore" si le signal reçu respectif est corrompu.

**13.** Récepteur selon l'une quelconque des revendications 2 à 12, agencé pour une diversité spatiale d'antenne et comprenant en outre deux antennes espacées (40a, 40b) auxquelles sont connectés respectivement les premier et deuxième circuits d'accord et de démodulation.

**14.** Récepteur selon l'une quelconque des revendications 2 à 12, agencé pour la diversité de polarisation d'antenne et comprenant en outre des première et deuxième antennes (40a, 40b) agencées de façon à recevoir des signaux de polarisations différentes, les premier et deuxième circuits d'accord et de démodulation étant connectés respectivement aux première et deuxième antennes.

**15.** Récepteur selon l'une quelconque des revendications 2 à 12, agencé pour la diversité de polarisation d'antenne et comprenant en outre des première et deuxième antennes (40a, 40b) agencées de façon à avoir des sensibilités directionnelles différentes, les premier et deuxième circuits d'accord et de démodulation étant connectés respectivement aux première et deuxième antennes.

**16.** Récepteur selon l'une quelconque des revendications 2 à 12, agencé pour la diversité de fréquence, dans lequel les premier et deuxième circuits d'accord sont adaptés pour recevoir des signaux à des fréquences de transmission différentes.

**17.** Récepteur selon l'une quelconque des revendications 2 à 16, qui compte plus de deux circuits d'accord et de démodulation numérique.

FIG. 1

PRIOR ART

EP 1 045 543 B1

FIG. 2

FIG. 3

EP 1 045 543 B1

D1

(a)

(b)

D2

(c)

(d)

## FIG. 4

Δ

N

W

E

S

## FIG. 6

FIG. 5

EP 1 045 543 B1

$P(O_2|O_1,T_1)$

$O_2$

$O_1$

FIG. 7